# EUROPÄISCHE PATENTSCHRIFT

(11) **EP 1 209 349 B1**
(45) Veröffentlichungstag und Bekanntmachung des Hinweises auf die Patenterteilung: **02.01.2008**
(21) Anmeldenummer: 01125017.2
(22) Anmeldetag: 20.10.2001
(51) Int. Cl.: F02M 37/00, F02M 55/00, F02M 63/02, F02M 53/02

(54) **Kraftstoffeinspritzsystem mit Kraftstoffvorwärmung und kraftstoffgekühltem Druckregelventil**
Fuel injection system with fuel preheating and fuel cooled pressure regulation valve
Système d'injection de carburant avec préchauffage de carburant et soupape de régulation de pression refroidie avec du carburant

(30) Priorität: 28.11.2000 DE 10059012
(43) Veröffentlichungstag der Anmeldung: 29.05.2002
(73) Patentinhaber: ROBERT BOSCH GMBH, 70442 Stuttgart (DE)
(72) Erfinder: Schueler, Peter, 71229 Leonberg (DE)

(56) Entgegenhaltungen:
- EP-A- 0 735 268
- WO-A-00/32929
- DE-A- 19 845 556
- DE-C- 19 714 488
- US-A- 4 850 327

## Beschreibung

### Stand der Technik

Die Erfindung betrifft ein Kraftstoffeinspritzsystem für Brennkraftmaschinen, mit einer Kraftstoffhochdruckpumpe, mit einem Common-Rail, mit mindestens einem Injektor, wobei die Kraftstoffhochdruckpumpe den oder die Injektoren über das Common-Rail mit Kraftstoff versorgt, mit einer Vorförderpumpe, die Kraftstoff aus einem Tank über eine Versorgungsleitung zur Kraftstoffhochdruckpumpe fördert, mit einer Rücklaufleitung zur Abfuhr von Kraftstoff aus dem Common-Rail, mit einem zwischen Common-Rail und Rücklaufleitung angeordneten Druckregelventil und mit einer Leckageleitung zur Abfuhr von Kraftstoff aus der Kraftstoffhochdruckpumpe.

Bei diesem aus der DE 198 45 556 A1 bekannten Kraftstoffeinspritzsystem weist das Druckregelventil einen Ausgang auf, der hydraulisch mit der Versorgungsleitung verbunden ist. Durch eine geignete Ansteuerung der Kraftstoffhochdruckpumpe kann das Versulzen des Kraftstoffs in der Versorgungsleitung vermieden werden, auch wenn die Umgebungstemperatur entsprechend niedrig ist.

Der Erfindung liegt die Aufgabe zu Grunde, ein Kraftstoffeinspritzsystem bereitzustellen, bei welchem keine Versulzung des Kraftstoffs auftritt und das Druckregelventil im Normalbetrieb gekühlt wird.

Diese Aufgabe wird erfindungsgemäß gelöst durch ein Kraftstoffeinspritzsystem nach dem Oberbegriff des Anspruchs 1, dadurch gelöst, dass das Druckregelventil einen Zufluß, einen ersten Ausgang und einen zweiten Ausgang aufweist, wobei der Zufluß mit dem Common-Rail hydraulisch in Verbindung steht, und dass der erste Ausgang und der zweite Ausgang des Druckregelventils hydraulisch miteinander verbunden sind.

### Vorteile der Erfindung

Im Druckregelventil wird ein Teil des unter hohem Druck stehenden Kraftstoffs aus dem Common-Rail entspannt. Die dabei dissipierte Energie führt zu einer Erwärmung des Kraftstoffs im Druckregelventil. Wenn dieser erwärmte Kraftstoff in die Versorgungsleitung eingekoppelt wird, ist sichergestellt, dass in der Versorgungsleitung, einem dort angeordneten Kraftstofffilter und in der Kraftstoffhochdruckpumpe keine Versulzung auftritt.

Da keine elektrischen Heizelemente o.dgl. zur Kraftstoffvorwärmung erforderlich sind, sondern die im Kraftstoff der Rücklaufleitung enthaltene Wärmeenergie zur Kraftstoffvorwärmung eingesetzt wird, ist das erfindungsgemäße Kraftstoffeinspritzsystem einfach im Aufbau. Außerdem erfordert die erfindungsgemäße Kraftstoffvorwärmung keinen zusätzlichen Energieeinsatz.

Bei einer Ausgestaltung der Erfindung ist vorgesehen, dass die hydraulische Verbindung von Rücklaufleitung und Versorgungsleitung von einem Temperaturventil hergestellt wird, dass das Temperaturventil die Versorgungsleitung in einen ersten Abschnitt zwischen Vorförderpumpe und Temperaturventil und in einen zweiten Abschnitt zwischen Temperaturventil und Kraftstoffhochdruckpumpe unterteilt, so dass die hydraulische Verbindung von Rücklaufleitung und Versorgungsleitung auf einfache und zuverlässige Weise erreicht wird.

Durch die Verwendung eines Druckregelventils mit einem Zufluss und zwei Ausgängen ist es möglich, neben der Kraftstoffvorwärmung auch noch eine Kühlung des Druckregelventils zur erreichen.

Weitere Varianten der Erfindung sehen vor, dass das Temperaturventil als Wegeventil, insbesondere als 10/2-Wegeventil, oder als Stromventil ausgebildet ist, so dass je nach geforderter Regelgüte und dem vorgegebenen Kostenrahmen die Erfindung realisiert werden kann.

In weiterer Ergänzung der Erfindung ist vorgesehen, dass das Druckregelventil einen Zufluss, einen ersten Ausgang und einen zweiten Ausgang aufweist, dass der Zufluss mit dem Common-Rail hydraulisch in Verbindung steht, und dass das Druckregelventil in Abhängigkeit des Drucks im Common-Rail eine hydraulische Verbindung zwischen Zufluss einerseits sowie erstem Ausgang und zweitem Ausgang andererseits herstellt.

Im Zusammenhang mit der Erfindung bedeutet Ausgang, dass sowohl Kraftstoff durch den Ausgang aus dem Druckregelventil herausströmen kann als auch in das Druckregelventil hereinströmen kann. Die Durchflußrichtung des ersten und des zweiten Ausgangs des Druckregelventils hängt vom Gegendruck in den mit den Ausgängen verbundenen Leitungen ab. Die Vorförderpumpe bspw. hat eine Förderhöhe von etwa 6,5 bar bis 8,5 bar, während in der Rücklaufleitung ein Druck von etwa 1,2 bar bis 1,6 bar herrscht. Wegen des außerordentlich hohen Drucks im Common-Rail von bis zu 1500 bar, findet ein Rückfluß aus dem Niederdruckbereich des Kraftstoffeinspritzsystems durch das Druckregelventil in den Common-Rail nicht statt.

Da das Druckregelventil teilweise hohe Wärmelasten abführen muss, und das Druckregelventil temperaturempfindlich ist, wird die Funktion des erfindungsgemäßen Kraftstoffeinspritzsystems verbessert, wenn das Druckregelventil gekühlt wird und somit der Temperaturbereich innerhalb dessen das Druckregelventil arbeitet verringert wird.

Die Verbindung von Kraftstoffvorwärmung und Kühlung des Druckregelventils wird dadurch erreicht, dass in einer ersten Schaltstellung des Temperaturventils der erste Ausgang des Druckregelventils mit der Rücklaufleitung in Verbindung steht, der zweite Ausgang des Druckregelventils mit der Leckageleitung in Verbindung steht und die Vorförderpumpe über die Versorgungsleitung in die Kraftstoffhochdruckpumpe fördert, dass in einer zweiten Schaltstellung des Temperaturventils der erste Ausgang des Druckregelventils mit dem ersten Abschnitt der Versorgungsleitung in Verbindung steht, der zweite Ausgang des Druckregelventils mit dem zweiten Abschnitt der Versorgungsleitung in Verbindung steht und die Leckageleitung mit der Rücklaufleitung in Verbindung steht.

In der ersten Schaltstellung fördert die Vorförderpumpe Kraftstoff zur Kraftstoffhochdruckpumpe. Das Temperaturventil nimmt diese Schaltstellung ein, wenn die Temperatur des Kraftstoffs in der Vorförderleitung so hoch ist, dass auch ohne Kraftstoffvorwärmung ke in Versulzen des Kraftstoffs auftritt. In dieser ersten Schaltstellung wird der aus der Kraftstoffhochdruckpumpe abgeführte Leckagestrom und die zur Schmierung der Kraftstoffhochdruckpumpe eingesetzte Kraftstoffmenge über den zweiten Ausgang in das Druckregelventil geführt, so dass mit diesem Kraftstoffstrom eine Kühlung des Druckregelventils erfolgt. Dieser Kraftstoffstrom wird zusammen mit dem aus dem Zufluss in dass Druckregelventil strömenden Kraftstoff, der sich bei der Drosselung im Druckregelventil stark aufheizt, über die Rücklaufleitung abgeführt. Üblicherweise mündet die Rücklaufleitung in den Tank. Da der Kraftstofffilter nicht mit den hohen Temperaturen dieses Kraftstoffs beaufschlagt wird, treten bei ihm auch keine unzulässig hohen Temperaturen auf.

In einer zweiten Schaltstellung fördert die Vorförderpumpe über den ersten Abschnitt der Versorgungsleitung Kraftstoff zum Druckregelventil. Dieser Kraftstoff vermischt sich mit dem im Druckregelventil entspannten Kraftstoff aus dem Common-Rail, so dass sich insgesamt eine Erwärmung des Kraftstoffs im zweiten Ausgang des Druckregelventils ergibt. Anschließend wird dieser Kraftstoff über den zweiten Abschnitt der Versorgungsleitung der Kraftstoffhochdruckpumpe zugeführt, so dass in der zweiten Schaltstellung ein Versulzen des Kraftstoffs in dem zweiten Abschnitt der Versorgungsleitung unterbunden wird. Die zweite Schaltstellung wird eingenommen, wenn die Umgebungstemperatur sehr niedrig ist und außerdem die Brennkraftmaschine ihre Betriebstemperatur noch nicht erreicht hat. Wegen der Gegendruckempfindlichkeit des Druckregelventils ist die Regelgüte des Drucks im Common-Rail in dieser Schaltstellung nicht so gut wie in der ersten Schaltstellung des Temperaturventils. Da die zweite Schaltstellung jedoch nur bei niedrigen Umgebungstemperaturen und während der Warmlaufphase der Brennkraftmaschine eingenommen wird, kann für diese kurzen Betriebszeiten eine möglicherweise eintretende geringfügige Verschlechterung der Regelgüte hingenommen werden.

In der ersten Schaltstellung, die während des weitaus größten Teils der Betriebszeit der Brennkraftmaschine eingenommen wird, ist die Regelgüte sehr hoch, da der Gegendruck in der Rücklaufleitung nahezu konstant ist.

Weitere Ergänzungen der Erfindung sehen vor, dass im zweiten Abschnitt der Versorgungsleitung ein Temperatursensor angeordnet ist, und dass das Temperaturventil in Abhängigkeit der vom Temperatursensor ermittelten Temperatur angesteuert wird, so dass auf einfache Weise die Umschaltung des Temperaturventils von der ersten zur zweiten Schaltstellung und umgekehrt erfolgen kann. Es ist auch möglich, dass das Temperaturventil von einem Steuergerät angesteuert wird.

Bei einer anderen Ausgestaltung der Erfindung ist im zweiten Abschnitt der Versorgungsleitung ein Kraftstofffilter, insbesondere ein Kraftstofffilter mit Wasserabscheider, vorgesehen, so dass auch ein Versulzen des Kraftstofffilters bei dem erfindungsgemäßen Kraftstoffeinspritzsystem verhindert wird.

Weitere Vorteile und vorteilhafte Ausgestaltungen der Erfindung sind der nachfolgenden Zeichnung und deren Beschreibung entnehmbar.

### Zeichnung

Es zeigen:
- Figur 1: ein Ausführungsbeispiel eines erfindungsgemäßen Kraftstoffeinspritzsystems in der ersten Schaltstellung des Temperaturventils und
- Figur 2: das erfindungsgemäße Kraftstoffeinspritzsystem nach Figur 1 in der zweiten Schaltstellung.

### Beschreibung der Ausführungsbeispiele

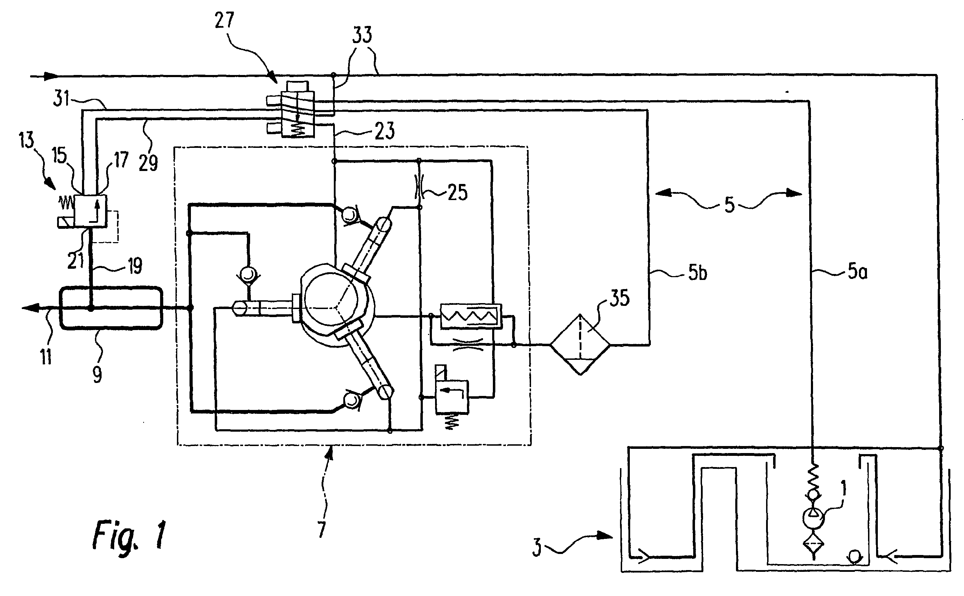

In Figur 1 ist ein erfindungsgemäßes Kraftstoffeinspritzsystem schematisch dargestellt. Eine Vorförderpumpe 1 fördert Kraftstoff aus einem Tank 3 über eine Versorgungsleitung 5 zu einer Kraftstoffhochdruckpumpe 7. Die Kraftstoffhochdruckpumpe 7 ist als Radialkolbenpumpe ausgeführt und ist nicht näher erläutert. Die Kraftstoffhochdruckpumpe 7 fördert Kraftstoff mit hohem Druck in eine Common-Rail 9. Das Common-Rail versorgt über eine oder mehrere Hochdruckleitungen 11 einen oder mehrere nicht dargestellte Injektoren mit Kraftstoff. Um den Druck im Common-Rail regeln zu können, ist ein Druckregelventil 13 vorgesehen. Das elektrisch betätigte Druckregelventil 13 wird von einem nicht dargestellten Steuergerät angesteuert. Das Druckregelventil 13 kann den Druck im Common-Rail 9 durch eine stetige Verstellung bspw. eines Schiebers, der einen ersten Ausgang 15 und einen zweiten Ausgang 17 freigibt, erfolgen. Alternativ kann das Druckregelventil 13 auch zwischen zwei Schaltstellungen hin- und herschalten.

Eine erste Verbindungsleitung 19 zwischen Druckregelventil 13 und Common-Rail 9 mündet in einem Zufluss 21 des Druckregelventils. Aus der Kraftstoffhochdruckpumpe 7 führt eine Leckageleitung 23 heraus, welche den zur Schmierung der Kraftstoffhochdruckpumpe eingesetzten Kraftstoff und den durch eine Nullförderdrossel 25 abfließenden Kraftstoff abführt. Die Leckageleitung 23 mündet in ein Temperaturventil 27, welches in dem dargestellten Ausführungsbeispiel als 10/2-Wegeventil ausgebildet ist. Über eine zweite Verbindungsleitung 29 ist die Leckageleitung 23 mit dem zweiten Ausgang 17 des Druckregelventils 13 verbunden. Der erste Ausgang 15 des Druckregelventils 13 ist über eine dritte Verbindungsleitung 31 mit einer Rücklaufleitung 33 verbunden.

In der in Figur 1 gezeigten ersten Schaltstellung des Temperaturventils 27 wird der Kraftstoff aus der Leckageleitung 23 dem Druckregelventil 13 über die erste Verbindungsleitung zugeführt und kühlt das Druckregelventil 13. Der Kraftstoff aus der Leckageleitung 13 und aus der ersten Verbindungsleitung 19, welcher im Druckregelventil 13 abgedrosselt wird, wird über die dritte Verbindungsleitung 31 der Rücklaufleitung 33 zugeführt, die ihrerseits in den Tank 3 mündet.

Die erste Schaltstellung des Temperaturventils 27 wird eingenommen, wenn die Umgebungstemperatur nicht außergewöhnlich niedrig ist und die Brennkraftmaschine im Wesentlichen ihre Betriebstemperatur erreicht hat. In dieser ersten Schaltstellung fördert die Vorförderpumpe 1 über die Versorgungsleitung 5 Kraftstoff zur Kraftstoffhochdruckpumpe 7. Das Druckregelventil 13 wird mit der Leckagemenge der Kraftstoffhochdruckpumpe 7 gekühlt, so dass die Regelgüte des Druckregelventils 13 verbessert wird, da der Temperaturbereich innerhalb dessen das Druckregelventil 13 betrieben wird, verringert wird. Da der Gegendruck des Druckregelventils 13 durch den Druck in der Rücklaufleitung 33, der nahezu konstant zwischen 1,2 und 1,6 bar liegt, vorgegeben ist, ist das Druckregelventil 13 in dieser ersten Schaltstellung mit einer sehr guten Regelgüte betreibbar.

Die Versorgungsleitung 5 wird durch das Temperaturventil 27 in einen ersten Abschnitt 5a, der die Vorförderpumpe 1 mit dem Temperaturventil 27 verbindet, und einem zweiten Abschnitt 5b, der das Temperaturventil 27 mit der Kraftstoffhochdruckpumpe 7 verbindet, unterteilt. Im zweiten Abschnitt 5b ist ein Kraftstofffilter 35 mit Wasserabscheider installiert. In der ersten Schaltstellung wird der Kraftstofffilter mit Kraftstoff versorgt, der direkt aus dem Tank 3 kommt, so dass keine unzulässig hohen Temperaturen des Kraftstoffs am Kraftstofffilter 35 auftreten können.

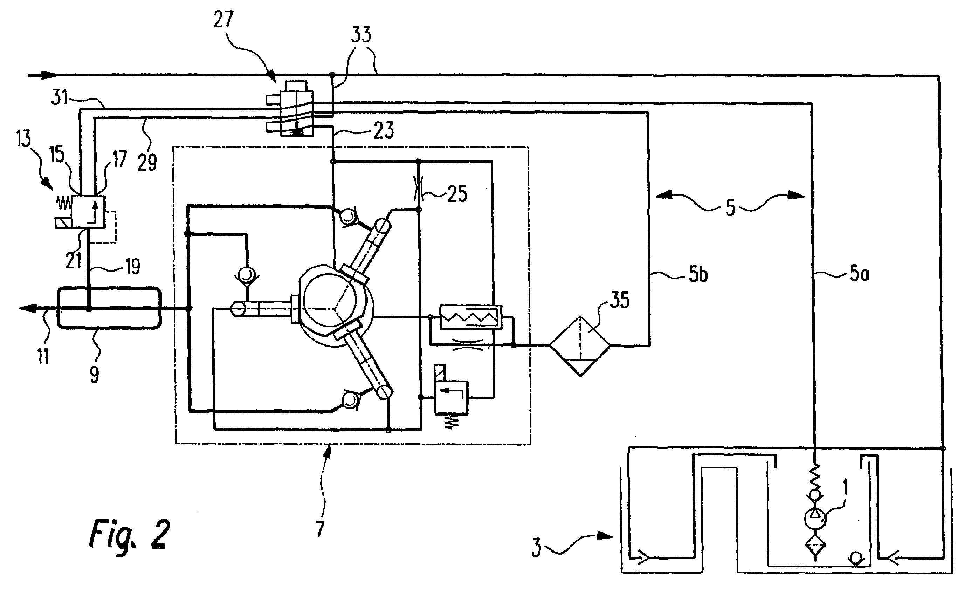

In Figur 2 ist das Ausführungsbeispiel des erfindungsgemäßen Kraftstoffeinspritzsystems in der zweiten Schaltstellung des Temperaturventils 27 dargestellt. Die Bezugszeichen entsprechen den in Figur 1 gewählten und es gilt das betreffend Figur 1 Gesagte entsprechend.

In der zweiten Schaltstellung fördert die Vorförderpumpe 1 über den ersten Abschnitt 5a und die dritte Verbindungsleitung 31 Kraftstoff zum Druckregelventil 13. Im Druckregelventil 13 wird dieser Kraftstoff mit dem aus der ersten Verbindungsleitung kommenden und durch die Drosselung im Druckregelventil 13 erwärmten Kraftstoff gemischt, so dass im zweiten Ausgang 17 vorgewärmter Kraftstoff über die zweite Verbindungsleitung 29 und den zweiten Abschnitt 5b zur Kraftstoffhochdruckpumpe 7 fließt. In dieser zweiten Schaltstellung, die bei niedriger Umgebungstemperatur und kalter Brennkraftmaschine eingenommen wird, ist gewährleistet, dass der Kraftstoff in dem zweiten Abschnitt 5b, dem Kraftstofffilter 35, dem Temperaturventil 27 und der Kraftstoffhochdruckpumpe 7 deutlich wärmer als die Versulzungstemperatur des Kraftstoffs ist.

In der gezeigten zweiten Schaltstellung fließt der aus der Kraftstoffhochdruckpumpe über die Leckageleitung 23 abgeführte Kraftstoff in die Rücklaufleitung 33. Da die zweite Schaltstellung nur eingenommen wird, wenn die Umgebungstemperatur niedrig ist und/oder die Brennkraftmaschine ihre Betriebstemperatur noch nicht erreicht hat, muss das Druckregelventil 13 auch nicht gekühlt werden. Außerdem wird in dieser zweiten Schaltstellung das Druckregelventil 13 mit dem kalten Kraftstoff aus dem Tank 3 gekühlt.

## Patentansprüche

1. Kraftstoffeinspritzsystem für Brennkraftmaschinen, mit einer Kraftstoffhochdruckpumpe (7), mit einem Common-Rail (9), mit mindestens einem Injektor, wobei die Kraftstoffhochdruckpumpe (7) den oder die Injektoren über das Common-Rail (9) mit Kraftstoff versorgt, mit einer Vorförderpumpe (1), die Kraftstoff aus einem Tank (3) über eine Versorgungsleitung (5) zur Kraftstoffhochdruckpumpe (7) fördert, mit einer Rücklaufleitung (33) zur Abfuhr von Kraftstoff aus dem Common-Rail (9), mit einem zwischen Common-Rail (9) und Rücklaufleitung (33) angeordneten Druckregelventil (13) und mit einer Leckageleitung (23) zur Abfuhr von Kraftstoff aus der Kraftstoffhochdruckpumpe (7), wobei das Druckregelventil (13) und die Versorgungsleitung (5b) in Abhängigkeit der Temperatur des Kraftstoffs in der Versorgungsleitung (5, 5a, 5b) hydraulisch verbindbar sind, **dadurch gekennzeichnet, dass** das Druckregelventil (13) einen Zufluß (21), einen ersten Ausgang (15) und einen zweiten Ausgang (17) aufweist, dass der Zufluß (21) mit dem Common-Rail (9) hydraulisch in Verbindung steht, und dass der erste Ausgang (15) und der zweite Ausgang (17) des Druckregelventils (13) hydraulisch miteinander verbunden sind.

2. Kraftstoffeinspritzsystem nach Anspruch 1, **dadurch gekennzeichnet, dass** die hydraulische Verbindung von Druckregelventil (13) und Versorgungsleitung (5b) von einem Temperaturventil (27) hergestellt wird, und dass das Temperaturventil (27) die Versorgungsleitung (5) in einen ersten Abschnitt (5a) zwischen Vorförderpumpe (1) und Temperaturventil (27) und in einen zweiten Abschnitt (5b) zwischen Temperaturventil (27) und Kraftstoffhochdruckpumpe (7) unterteilt.

3. Kraftstoffeinspritzsystem nach Anspruch 1 oder 2, **dadurch gekennzeichnet, dass** das Temperaturventil (27) als Wegeventil, insbesondere als 10/2-Wegeventil, ausgebildet ist.

4. Kraftstoffeinspritzsystem nach Anspruch 1 oder 2, **dadurch gekennzeichnet, dass** das Temperaturventil (27) als Stromventil ausgebildet ist.

5. Kraftstoffeinspritzsystem nach einem der vorhergehenden Ansprüche, **dadurch gekennzeichnet, dass** das Druckregelventil (13) in Abhängigkeit des Drucks im Common-Rail (9) eine hydraulische Verbindung zwischen Zufluß (21) einerseits sowie erstem Ausgang (15) und zweitem Ausgang (17) andererseits herstellt.

6. Kraftstoffeinspritzsystem nach Anspruch 5, **dadurch gekennzeichnet, dass** in einer ersten Schaltstellung des Temperaturventils (27) der erste Ausgang (15) des Druckregelventils (13) mit der Rücklaufleitung (33) in Verbindung steht, der zweite Ausgang (17) des Druckregelventils (13) mit der Leckageleitung (23) in Verbindung steht und die Vorförderpumpe (1) über die Versorgungsleitung (5) in die Kraftstoffhochdruckpumpe (7) fördert, dass in einer zweiten Schaltstellung des Temperaturventils (27) der erste Ausgang (15) des Druckregelventils (13) mit dem ersten Abschnitt (5a) der Versorgungsleitung (5) in Verbindung steht, der zweite Ausgang (5b) des Druckregelventils (13) mit dem zweiten Abschnitt (5b) der Versorgungsleitung (5) in Verbindung steht und die Leckageleitung (23) mit der Rücklaufleitung (33) in Verbindung steht.

7. Kraftstoffeinspritzsystem nach einem der vorhergehenden Ansprüche, **dadurch gekennzeichnet, dass** im zweiten Abschnitt (5b) der Versorgungsleitung (5) ein Temperatursensor angeordnet ist, und dass das Temperaturventil (27) in Abhängigkeit der vom Temperatursensor ermittelten Temperatur angesteuert wird.

8. Kraftstoffeinspritzsystem nach einem der vorhergehenden Ansprüche, **dadurch gekennzeichnet, dass** im zweiten Abschnitt (5b) der Versorgungsleitung (5) ein Kraftstofffilter (35), insbesondere ein Kraftstofffilter mit Wasserabscheider, vorgesehen ist.

9. Kraftstoffeinspritzsystem nach einem der vorhergehenden Ansprüche, **dadurch gekennzeichnet, dass** die Vorförderpumpe (1) elektrisch angetrieben wird und in einem Tank (3) angeordnet ist.

## Claims

1. Fuel injection system for internal combustion engines, having a high-pressure fuel pump (7), having a common rail (9), having at least one injector, wherein the high-pressure fuel pump (7) supplies the injector(s) with fuel via the common rail (9), having a prefeed pump (1) which delivers fuel from a tank (3) to the high-pressure fuel pump (7) via a supply line (5), having a return line (33) for the discharge of fuel out of the common rail (9), having a pressure regulating valve (13) arranged between the common rail (9) and the return line (33), and having a leakage line (23) for the discharge of fuel out of the high-pressure fuel pump (7), with it being possible for the pressure regulating valve (13) and the supply line (5b) to be hydraulically connected as a function of the temperature of the fuel in the supply line (5, 5a, 5b), **characterized in that** the pressure regulating valve (13) has an inflow (21), a first outlet (15) and a second outlet (17), **in that** the inflow (21) is hydraulically connected to the common rail (9), and **in that** the first outlet (15) and the second outlet (17) of the pressure regulating valve (13) are hydraulically connected to one another.

2. Fuel injection system according to Claim 1, **characterized in that** the hydraulic connection of the pressure regulating valve (13) and supply line (5b) is produced by a temperature valve (27), and **in that** the temperature valve (27) divides the supply line (5) into a first section (5a) between the prefeed pump (1) and the temperature valve (27) and a second section (5b) between the temperature valve (27) and the high-pressure fuel pump (7).

3. Fuel injection system according to Claim 1 or 2, **characterized in that** the temperature valve (27) is embodied as a directional control valve, in particular as a 10/2 directional control valve.

4. Fuel injection system according to Claim 1 or 2, **characterized in that** the temperature valve (27) is embodied as a flow-control valve.

5. Fuel injection system according to one of the preceding claims, **characterized in that** the pressure regulating valve (13) produces a hydraulic connection between the inflow (21) on the one hand and the first outlet (15) and second outlet (17) on the other hand as a function of the pressure in the common rail (9).

6. Fuel injection system according to Claim 5, **characterized in that**, in a first switching position of the temperature valve (27), the first outlet (15) of the pressure regulating valve (13) is connected to the return line (33), the second outlet (17) of the pressure regulating valve (13) is connected to the leakage line (23), and the prefeed pump delivers into the high-pressure fuel pump (7) via the supply line (5), **in that**, in a second switching position of the temperature valve (27), the first outlet (15) of the pressure regulating valve (13) is connected to the first section (5a) of the supply line (5), the second outlet (17) of the pressure regulating valve (13) is connected to the second section (5b) of the supply line (5), and the leakage line (23) is connected to the return line (33).

7. Fuel injection system according to one of the preceding claims, **characterized in that** a temperature sensor is arranged in the second section (5b) of the supply line (5), and **in that** the temperature valve (27) is activated as a function of the temperature determined by the temperature sensor.

8. Fuel injection system according to one of the preceding claims, **characterized in that** a fuel filter (35), in particular a fuel filter with a water separator, is provided in the second section (5b) of the supply line (5).

9. Fuel injection system according to one of the preceding claims, **characterized in that** the prefeed pump (1) is electrically driven and is arranged in a tank (3).

## Revendications

1. Système d'injection de carburant pour moteurs à combustion interne, comprenant :
une pompe à carburant haute pression (7),
une rampe commune (9),
au moins un injecteur, sachant que la pompe à carburant haute pression (7) alimente en carburant le ou les injecteurs par la rampe commune (9),
une pompe de pré-alimentation (1) qui achemine du carburant provenant d'un réservoir (3) par l'intermédiaire d'une conduite d'alimentation (5) à la pompe à carburant haute pression (7),
une conduite de retour (33) pour l'évacuation du carburant de la rampe commune (9),
une soupape de régulation de pression (13) agencée entre la rampe commune (9) et la conduite de retour (33), et
une conduite de fuite (23) pour l'évacuation du carburant de la pompe à carburant haute pression (7),
sachant que la soupape de régulation de pression (13) et la conduite d'alimentation (5b) peuvent être reliées hydrauliquement en fonction de la température du carburant présent dans la conduite d'alimentation (5, 5a, 5b),
**caractérisé en ce que**
la soupape de régulation de pression (13) présente une entrée (21), une première sortie (15) et une deuxième sortie (17), l'entrée (21) est en liaison hydraulique avec la rampe commune (9), et la première sortie (15) et la deuxième sortie (17) de la soupape de régulation de pression (13) sont reliées l'une à l'autre hydrauliquement.

2. Système d'injection de carburant selon la revendication 1,
**caractérisé en ce que**
la liaison hydraulique entre la soupape de régulation de pression (13) et la conduite d'alimentation (5b) est faite par une vanne thermique (27), et la vanne thermique (27) divise la conduite d'alimentation (5) en un premier segment (5a) entre la pompe de pré-alimentation (1) et la vanne thermique (27), et en un deuxième segment (5b) entre la vanne thermique (27) et la pompe à carburant haute pression (7).

3. Système d'injection de carburant selon la revendication 1 ou 2,
**caractérisé en ce que**
la vanne thermique (27) est un distributeur à plusieurs voies, notamment d'un distributeur 10/2.

4. Système d'injection de carburant selon la revendication 1 ou 2,
**caractérisé en ce que**
la vanne thermique (27) est une soupape de régulation de débit.

5. Système d'injection de carburant selon l'une des revendications précédentes,
**caractérisé en ce que**
la soupape de régulation de pression (13) réalise, en fonction de la pression régnant dans la rampe commune (9), une liaison hydraulique entre l'entrée (21), d'une part, et la première sortie (15) et la deuxième sortie (17), d'autre part.

6. Système d'injection de carburant selon la revendication 5,
**caractérisé en ce que**
dans une première position de commutation de la vanne thermique (27), la première sortie (15) de la soupape de régulation de pression (13) est reliée à la conduite de retour (33), la deuxième sortie (17) de la soupape de régulation de pression (13) est reliée à la conduite de fuite (23) et la pompe de pré-alimentation (1) refoule, par la conduite d'alimentation (5), dans la pompe à carburant haute pression (7), dans une deuxième position de commutation de la vanne thermique (27), la première sortie (15) de la soupape de régulation de pression (13) est reliée au premier segment (5a) de la conduite d'alimentation (5), la deuxième sortie (5b) de la soupape de régulation de pression (13) est reliée au deuxième segment (5b) de la conduite d'alimentation (5), et la conduite de fuite (23) est reliée à la conduite de retour (33).

7. Système d'injection de carburant selon l'une des revendications précédentes,
**caractérisé par**
un capteur de température dans le deuxième segment (5b) de la conduite d'alimentation (5), la vanne thermique (27) étant commandée en fonction de la température déterminée par le capteur thermique.

8. Système d'injection de carburant selon l'une des revendications précédentes,
**caractérisé par**
un filtre à carburant (35) dans le deuxième segment (5b) de la conduite d'alimentation (5), notamment un filtre à carburant à séparateur d'eau.

9. Système d'injection de carburant selon l'une des revendications précédentes,
**caractérisé en ce que**
la pompe de pré-alimentation (1) est à entraînement électrique et est disposée dans un réservoir (3).
